(19) Europäisches Patentamt
European Patent Office
Office européen des brevets

(11) **EP 1 793 480 A2**

(12) **EUROPEAN PATENT APPLICATION**

(43) Date of publication:
**06.06.2007 Bulletin 2007/23**

(51) Int Cl.:
**H02K 21/00** *(2006.01)*

(21) Application number: **06012751.1**

(22) Date of filing: **21.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.11.2005 JP 2005346002**

(71) Applicants:
• **Value Supplier & Developer Corporation**
**Noda-shi**
**Chiba (JP)**

• **Kato, Jiri**
**Nagoya**
**Aichi (JP)**

(72) Inventor: **Kurosawa, Keiji**
**Noda-shi**
**Chiba, 270-0213 (JP)**

(74) Representative: **Kramer - Barske - Schmidtchen**
**Radeckestrasse 43**
**81245 München (DE)**

(54) **Flywheel electric generator**

(57) A flywheel electric generator comprises a start-up motor, a flywheel rotary shaft rotated by the motor, a flywheel rotating by coupling with the rotary shaft, a plurality of permanent magnets disposed at substantially equal spaces of center angles on outer circumferential sections of the flywheel, a pair of electromagnets arranged fixedly at positions on a diameter line of the flywheel so as to face the permanent magnets and an electronic generator rotationally driven by the rotary shaft.

Fig.1

EP 1 793 480 A2

**Description**

CROSS-REFERENCE TO RELATED APPLICATIONS

This application is based upon and claims the benefit of priority from the prior Japanese Patent Application No. 2005-346002, filed on November 30, 2005, the entire contents of which are incorporated herein by reference.

BACKGROUND OF THE INVENTION

The present invention relates to a flywheel electric generator utilizing rotational kinetic energy of a flywheel.

The flywheel electric generator is an electric generator to discharge kinetic energy stored in the flywheel coupled to a rotor of the electric generator, as electric power. That is, the flywheel electric generator employs a system by which electric energy is converted into rotational energy of an object having large inertia moment to store it. In general, the flywheel electric generator is often utilized to supply electric power to a load in need of pulse-like large electric power.

For instance, a nuclear fusion system confining plasma by means of a magnetic field supplies electric power of several hundreds of thousands kw in a short time such as several seconds sometimes, so that it is disagreeable to directly obtain such pulse-like electric power from a electric power system because the influence on the power system is too considerable. Therefore, such a field of the electric power system employs the flywheel electric generator. The flywheel electric generator operates in such a cycle that it increases the number of rotations of an electric generator over a time interval of several minutes to store the kinetic energy in the flywheel, and discharges the kinetic energy stored in the flywheel in supplying the electric power to a load to result in a decrease in the number of the rotations of the electric generator.

Usually, a conventional flywheel electric generator directly couples an electric motor for driving to an electric generator. An output from the electric generator independents from the electric power system and the flywheel electric generator also varies the number of rotations of the electric generator with the power supply to the load, so that a frequency also varies in synchronization with the number of rotations thereof.

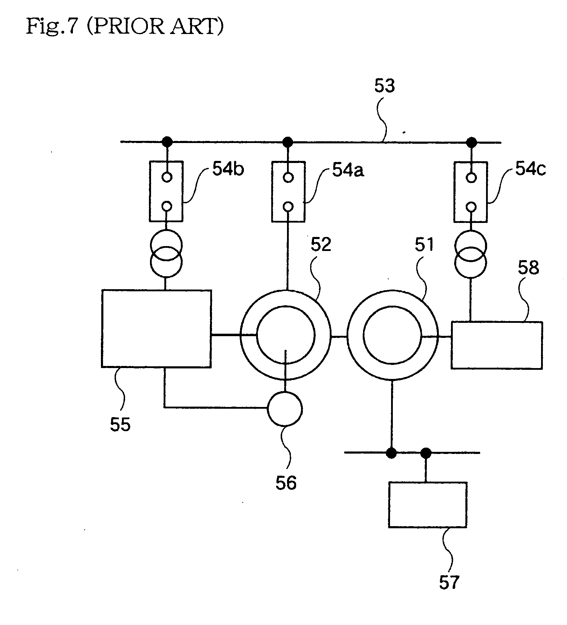

FIG. 7 shows a configuration view of a control device of such conventional flywheel electric generator. A flywheel electric generator 51 is driven by an electric motor for driving 52 to store the kinetic energy in the flywheel electric generator 51. The electric motor 52 is connected to a receiving-power-end bus-bar 53 of the electric power system through a breaker 54a and controlled by a Scherbius device 55 on the basis of the number of rotations from a means 56 for detecting the number of rotations. The Scherbius device 55 conducts secondary exciting control of the electric motor 52 to regenerate a part of secondary electric power generated on a secondary side to the bus-bar 53 through a breaker 54b.

To supply the electric power from the flywheel electric generator 51 to a load 57, the electric generator 51 is excited by an exciting device 58 to generate the electric power and supplies it to the load 57 to decrease the number of its own rotations. The electric generator 51 supplies an excitation power source to the exciting device 58 from the bus-bar 53 through a breaker 54c (refer to, for instance, Japanese Patent Application KOKAI Publication No. 2001-258294).

With respect to a structure of a fly wheel electric generator, in a conventional flywheel electric generator, other than one, in which a flywheel is attached to a usual salient pole type electric generator to operate it by using a usual bearing in the atmosphere, a technique using a magnetic shaft composed of a levitating magnet and a levitating bulk made of a high-temperature superconductor positioned facing the levitating magnet in a sealed container and operating the flywheel electric generator by setting surrounding atmospheric pressure of the rotor in the sealed container to a range within 0.1 atm to 0.4 atm is disclosed (refer to, for instance, Japan Patent Application KOKAI Publication No. 6-303738).

In such a conventional flywheel electric generator, the heavier the weight of the flywheel becomes, the larger an energy storage quantity becomes and, on the other hand, the larger a mechanical loss at the bearing, etc., becomes. Therefore, in the case of use of a usual bearing for the flywheel electric generator, a requirement for a large output causes a large mechanical loss at the bearing and certainly causes a reduction in efficiency as the flywheel electric generator.

As disclosed in the latter patent document given above, the technique, in which the magnetic shaft composed of the levitating magnet and the levitating bulk made of the high-temperature superconductor positioned facing the levitating magnet is used in the sealed container, needs a large-scaled device for operating the high-temperature superconductor sufficiently.

As mentioned above, the system for housing the flywheel electric generator in the sealed container is not preferable because the whole of the system becomes complex and large and the system takes a great deal of time in working maintenance and inspection and in re-starting thereafter.

BRIEF SUMMARY OF THE INVENTION

The present invention is invented on the basis of the foregoing situation, and an object of the invention is to provide a flywheel electric generator capable of obtaining an output with efficiency even in the atmosphere.

A flywheel electric generator according to an embodiment of the present invention includes a start-up motor; a flywheel rotary shaft which is rotated by the start-up motor; a flywheel which rotates by coupling with the flywheel rotary shaft; a plurality of permanent magnets which are disposed at a substantially equal distance on outer circumferential sections of the flywheel; a pair of electromagnets arranged at fixed positions on both sides of the flywheel along its diameter direction so as to face the permanent magnets; and an electric generator which is rotationally driven by the flywheel rotary shaft.

In the flywheel electric generator described above, the flywheel is composed of two pieces of circular plates which are arranged separately in parallel to each other and a plurality of support plates which are disposed so as to couple the two pieces of the circular plates with one another on circumferential sections thereof, and the plurality of permanent magnets are supported on the plurality of the support plates, respectively.

Further, in the flywheel electric generator, the flywheel rotary shaft is coupled with the start-up motor and the electric generator, respectively, through a first and a second clutches.

Further, in the flywheel electric generator, the facing surfaces of the permanent magnets and the electromagnets are arranged at prescribed inclination angle.

Further, in the flywheel electric generator, the inclination angle is not more than 30° each.

Further, in the flywheel electric generator, the inclination angle is approximately 22.5° each.

Further, in the flywheel electric generator, the first and second clutches are electromagnetic clutches.

Further, in the flywheel electric generator, the permanent magnets of an even number are arranged on the outer circumferential sections of the flywheel.

And further, in the flywheel electric generator, a minimum gap between the facing surfaces of the electromagnets and the permanent magnets is 1 mm.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

BRIEF DESCRIPTION OF THE SEVERAL VIEWS OF THE DRAWING

The accompanying drawings, which are incorporated in and constitute a part of the specification, illustrate embodiments of the invention, and together with the general description given above and the detailed description of the embodiments given below, serve to explain the principles of the invention.

FIG. 1 is an exemplary schematic side elevation view showing an embodiment of a flywheel electric generator of the present invention;
FIG. 2 is an exemplary schematic horizontal plan view of the flywheel electric generator shown in FIG. 1;
FIG. 3 is an exemplary horizontal cross sectional view of the flywheel shown in FIG. 1;
FIG. 4 is an exemplary graph indicating measured torque of a stepping motor shown in FIG. 3;
FIG. 5 is an exemplary partly enlarged view of the stepping motor shown in FIG. 3;
FIG. 6 is an exemplary explanatory view used for calculating torque in operating the flywheel electric generator; and
FIG. 7 is an exemplary block diagram showing an example of use of a conventional flywheel electric generator.

DETAILED DESCRIPTION OF THE INVENTION

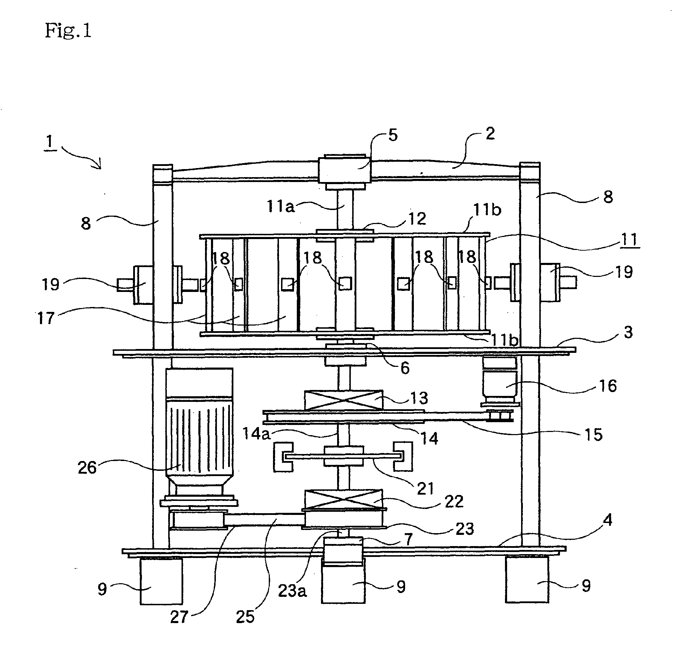

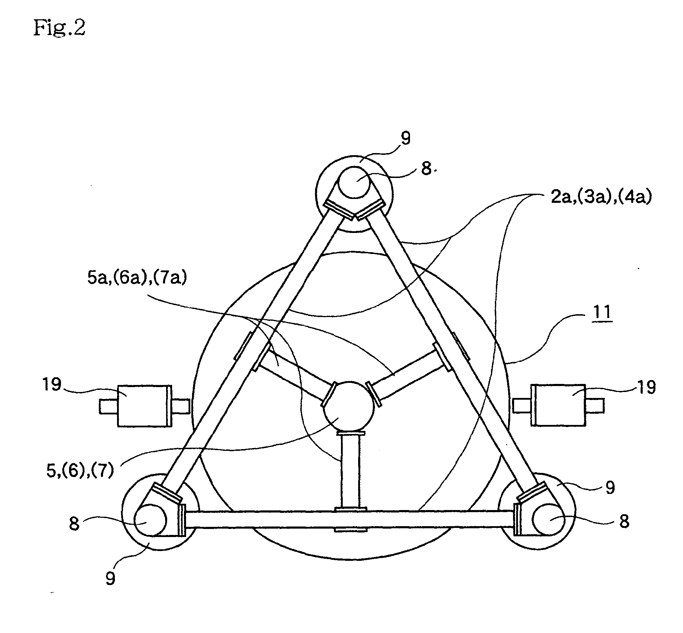

Hereinafter, embodiments of the present invention will be described with reference to the drawings in detail. FIG. 1 is an exemplary side elevation view showing a schematic configuration of a flywheel electric generator regarding an embodiment of the present invention, and FIG. 2 is its exemplary plan view.

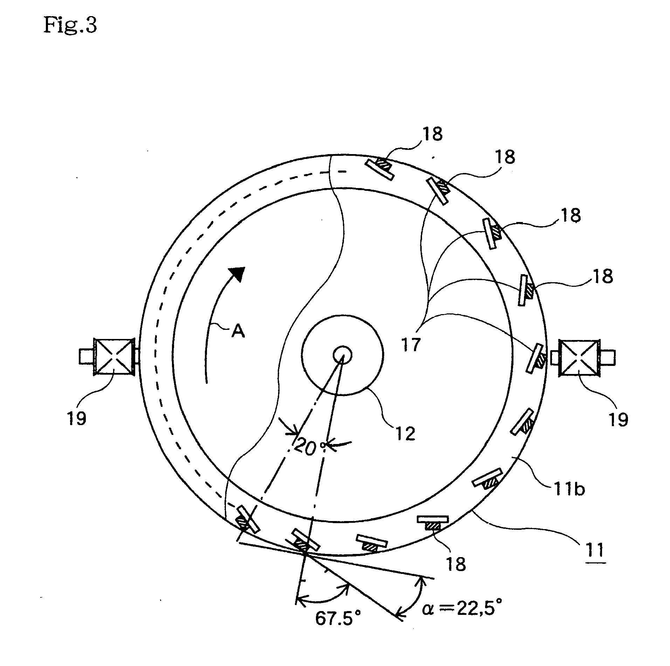

A flywheel electric generator 1 of the embodiment includes three stages of angle structures 2, 3 and 4 which are arranged at each position of an upper stage, a middle stage and a lower stage in a vertical direction, respectively. The upper stage angle structure 2 is formed, as shown in FIG. 2, of three arms 2a which are coupled so that they form a planar shape of a triangle. An upper stage bearing 5 is supported with three arms 2a through three bearing support arms 5a at the central part of the upper stage angle structure 2. The middle stage angle structure 3 is also has the approximately same structure as that of the upper angle structure 2. That is, the middle stage angel structure 3 is formed, as partly shown in FIG. 3, of three arms 3a which are coupled with one another so that its planar shape becomes a triangle. A middle stage bearing 6 is supported by the three arms 3a through three bearing support arms 6a at the central part of the middle stage angel structure 3. The lower stage angel structure 4 is also has the approximately same structure as that of the upper angle structure 2. That is, the lower stage angel structure 4 is also formed, as a partly shown in FIG. 3, of three arms 4a which are coupled with one another so that its planner shape becomes a triangle. A lower stage bearing 7 is supported by the three arms 4a through three bearing support arms 7a at the central part of the lower stage angle structure 4.

The tops of the angle structures 2, 3 and 4 are fixed with three fixing poles 8 formed in a vertically elected state on leg bases 9, respectively, and the angle structures 2, 3 and 4 of the three stages are integrally coupled with one another.

The flywheel 11 is fixed to a flywheel rotary shaft 11a pivoted by an upper stage bearing 5 disposed at the upper stage angle structure 2 and by a middle stage bearing 6 disposed at the middle stage angle structure 3 by use of a hub 12. The rotary shaft 11a is extended downward from the middle stage bearing 6 and its lower end is coupled with a first electromagnetic clutch 13. The first electromagnetic clutch 13 is also coupled with a first pulley rotary shaft 14a. Thus, the flywheel rotary shaft 11a and the first pulley rotary shaft 14a are coupled or separated in accordance with opening/closing of the first electromagnetic clutch 13, and as a result, electric power is transmitted or shut off.

The first pulley 14 is coupled with a start-up motor 16 fixed on the lower surface of the middle stage angel structure 3 through a transmission belt 15. The transmission belt 15, accordingly, transmits the electric power from the start-up motor 16 to the first pulley 14. The start-up motor 16 is, for example, a two-pole motor of 2.2 kw using an inverter and its number of rotations is 3,400 rpm.

The flywheel 11 is a basket-shaped rotor in which two metallic circular plates 11b are supported in parallel to each other with a plurality of sheets of iron-made support plates 17. Here, the support plates 17 are formed, for instance, by 18 sheets thereof and arranged at substantially an equal angular space of around 20° on the peripheral edges of each circular plate 11b. Each plate-like permanent magnet 18 is fixed on a surface of the sheet at an approximately central section in a vertical direction of each support plate 17.

FIG. 3 is the horizontal cross sectional view of the flywheel 11 shown in FIG. 1. As shown in FIG. 3, each plate surface of the support plates 17 is not perpendicular to each radius direction of the flywheel 11 and arranged with an inclination thereto. Each plate surface of the plate-like permanent magnets 18 fixed on each plate surface of the support plates 17 is also arranged with an inclination to the radius direction. The inclination angle is around 67.5° at the cross angle between the radius direction of the flywheel 11 and the plate surface of the permanent magnet 18, and around 22.5° at the cross angle between a tangent direction of a circle forming the outer circumference of the flywheel 11 and the plate surface of the permanent magnet 18.

A pair of electromagnets 19 is arranged at fixed positions on both sides of the flywheel 11 along its diameter direction so as to face the permanent magnet 18.

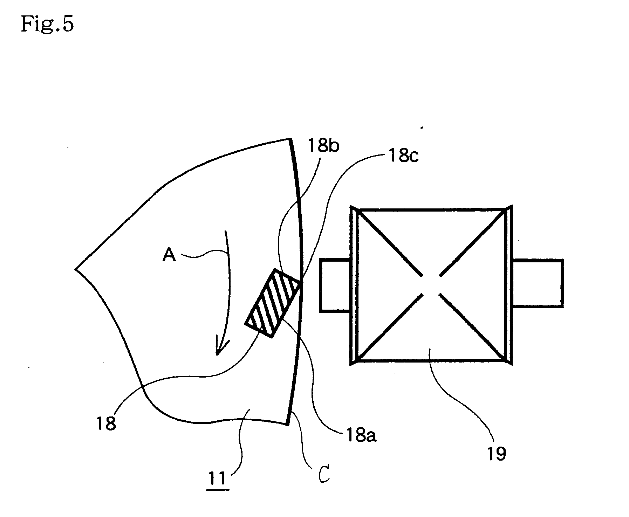

FIG. 5 is a partly enlarged view showing a positional relationship between the permanent magnet 18 fixed to the outer circumferential section of the flywheel 11 and the electromagnet 19 disposed to face the permanent magnet 18. The permanent magnet 18 has a shape of which the horizontal cross sectional shape is a rectangular with a long side 18a and a short side 18b, and each corner 18c at which the sides 18a and 18b are crossed is arranged on an outer circumferential edge C of the flywheel 11. Here, the rotating direction of the flywheel 11 is indicated by an arrow A. The long side 18a is arranged with an inclination so as to be closer to a central side rather than the outer circumferential edge C toward the rotating direction. The inclination angle is experimentally confirmed that the above-described angle is preferable therefor.

On the other hand, the pair of electromagnets 19 is disposed at positions facing the permanent magnets 18 which are fixed on the outer circumferential sections of the flywheel 11 with prescribed gaps. The electromagnets 19 are respectively disposed, as shown in FIG. 3, on the opposite sides on a diameter line (not shown) crossing the flywheel 11. Not shown in the figure, the pair of electromagnets 19 is supported with fixing poles 18 fixing the angle structures 2, 3 and 4 at the circumferences of the flywheel 11.

With the arrangement given above, each of the permanent magnet 18 and the electromagnet 19 form a magnetic circuit for a motor. In other words, the magnet 18 forms a rotor, the pair of electromagnets 19 forms a stator, and the supplying a pulse signal to the pair of electromagnets 19 forms a stepping motor (pulse motor). The stepping motor drives the flywheel 11, for instance, at a time when the number of rotations is 400 rpm.

In the lower section of the first pulley 14, a break disk 21 operating as a disk break is fixed to the first pulley rotary shaft 14a, and a second electromagnetic clutch 22 is coupled to the lower end of the rotary shaft 14a. The opposed end of the second electromagnetic clutch 22 is fixed to a pulley rotary shaft 23a of which the lower end is pivoted by a lower stage bearing 7. A second pulley 23 is fixed to the second pulley rotary shaft 23a. A transmission belt 25 couples the second pulley 23 with an electric generator pulley 27 fixed to a rotary shaft of an electric generator 26. The electric generator 26 rotating in accordance with the rotation of the electric generator pulley 27 has, for instance, a rated power of 7.5 kw, an AC frequency of 30 Hz and the number of rotations of 600 rpm.

Next to this, operations of the electric generator 26 having the flywheel 11 configured as mentioned above will be described by dividing them into three steps.

(Step 1: Start-up step)

The electric generator 26 closes the first clutch 13 to star-up the rotation of the start-up motor 16 in a state with the second clutch 22 opened therein, then, transmits its torque to the first pulley rotary shaft 14a through the transmission belt 15 and the first pulley 14 to rotate it. At this moment, the first clutch 13 having closed, the first pulley rotary shaft 14a and the flywheel rotary shaft 11a are coupled with each other. The rotation of the first pulley rotary shaft 14a is thereby transmitted to the flywheel rotary shaft 11a to rotate it and further rotate the flywheel 11 fixed to the flywheel rotary shaft 11a.

(Step 2: Flywheel rotation step)

After starting up the rotation of the flywheel 11, the electric generator 26 opens the first clutch 13 to disconnect the flywheel rotary shaft 11a from the rotary shaft 14a of the first pulley 14. In this state, the pair of electromagnets 19 is supplied with pulse currents by a pulse signal generator, which is not shown in the drawings. The pulse currents are applied at timing right after each permanent magnet 18 has passed through the position facing each electromagnet 19 by the rotations of the flywheel 11. As the result of the excitation caused by the pulse signals from the electromagnets 19, repulsive force generated between the electromagnets 19 and the permanent magnets 18 further applies torque to the flywheel 11 in the rotating direction thereof.

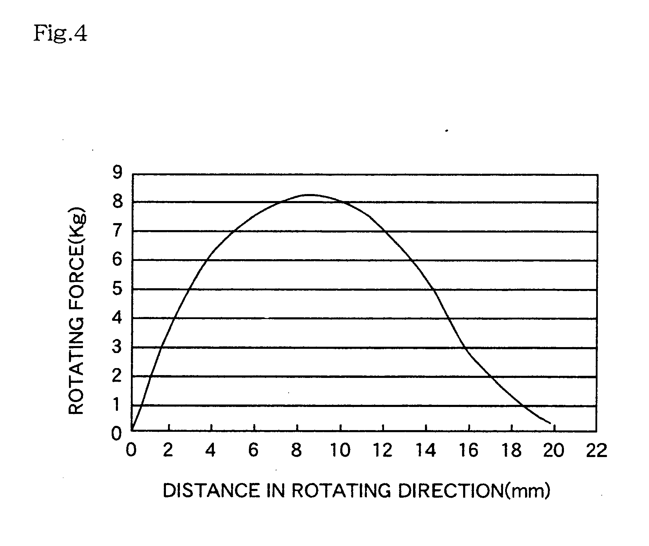

FIG. 4 is a graph showing a result of measurement of relationships between relative positions of the permanent magnets 18 against the electromagnets 19 disposed on the flywheel 11 and the torque (knockout force). During the measurement, each plate face of the permanent magnet 18 is disposed in a state in which it is not inclined to the radius direction of the flywheel 11 but orthogonal thereto and each opposing gap between the permanent magnet 18 and the electromagnet 19 in the radius direction is kept at 1 mm. The lateral axis of FIG. 4 indicates the distance (mm) between the permanent magnet 18 and electromagnet 19 in the rotating direction of the flywheel 11 in a range of 0 to 20 mm, and the longitudinal axis indicates the torque (kg) at the stepping motor.

As cleared from FIG. 4, the torque of the stepping motor reaches a maximum value of around 8 kg when the distance between the permanent magnet 18 and the electromagnet 19 in the rotating direction is around 8 mm. The maximum torque is generated as pulling force when the distance between the permanent magnet 18 and the electromagnet 19 becomes 8 mm before the permanent magnet 18 passes through the position facing the electromagnet 19 (entrance side), and as reaction force when the distance between the permanent magnet 18 and the electromagnet 19 becomes 8 mm after the permanent magnet 18 passes through the position facing the electromagnet 19 (exit side). In the embodiment of the invention, however, as shown in FIG. 5, each plate surface of the permanent magnet 18 is inclined to the radius direction of the flywheel 11, and the pulse currents are applied at the timing right after the permanent magnet 18 has passes through the position opposite to the electromagnet 19 by the rotation of the flywheel 11. In other words, if the pulse currents for the electromagnet 19 are applied at the exit side, the electric generator 26 can continuously operate the torque also to the side 18b of the permanent magnet 18 after operating the torque to the side 18a of the outer circumferential side of the permanent magnet 18. The operation results in enabling the electric generator 26 to apply a strong knockout force to the permanent magnet 18. This fact is also confirmed experimentally.

After the rotating speed of the flywheel 11 has reached a sufficient speed, even when the electric generator 26 stops applying the pulse currents to the electromagnet 19, the flywheel 11 keeps the rotations by itself over a prescribed time interval by inertia.

(Step 3: Power generation step)

When the flywheel 11 reaches the prescribed number of rotations, the electric generator 26 brings both first and second clutches 13 and 22 into closed states. The operations of two clutches 13 and 22 produce coupling among the flywheel rotary shaft 11a, the first pulley rotary shaft 14a and the second pulley rotary shaft 23a with one another. The coupling results in the transmission of the rotations of the flywheel 11 to the second pulley rotary shaft 23a through the flywheel rotary shaft 11a and the first pulley rotary shaft 14a to make the second pulley rotary shaft 23a rotate. The rotations of the second pulley rotary shaft 23a makes the second pulley 23 rotate and further makes the electric generator pulley 27 rotate through the transmission belt 25. The electric generator pulley 27 being fixed to the rotary shaft of the electric generator 26, the electric generator 26 generates the electric power. The electric generator 26 can be stopped by operating the break disk 21.

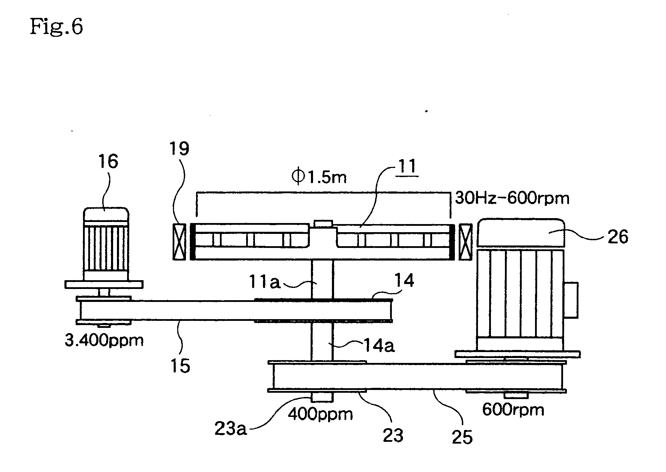

Successively, the torque acting on the flywheel rotary shaft 11a in operating the flywheel electric generator 1 will be described by referring to the explanatory view of the flywheel electric generator of the present invention shown in FIG. 6. In FIG. 6, two clutches 13 and 22 are in a state of closing in generating the electric power. Thus, each of the rotary shafts 11a, 14a and 23a being possible to be regarded as a single shaft, the clutches 13 and 22 are omitted from FIG. 6.

The torque (TF) of the flywheel rotary shaft 11a becomes the sum of the torque (TA) from the start-up motor 16 and the torque (TB) from the stepping motor formed on the outer circumferential section of the flywheel 11. Hereinafter, the torque (TF), (TA) and (TB) will be explained in turn.

(a) Torque (TA) from the Start-up Motor 16 of the Flywheel Rotary Shaft 11a

The following Formula 1 is satisfied for the relationship among the torque (TF), (TA) and (TB) where the number of rotations of the start-up motor 16 is N (rpm), a torque is T (Nm) and rated electric power is H (kw).

$$H = \{T(2\pi N)/60\}/1,000 \qquad (Formula\ 1)$$

With modification of Formula 1, the following Formula 2 is satisfied where unit conversions are 1 kg = 9.80 Nm, and NM = 0.101972 kg · m.

$$T = (60,000/2\pi)H/N \qquad (Formula\ 2)$$

The Formula 2 is modified as follows: where the output from the start-up motor 16 is 2.2 kw and the number of rotations of flywheel rotary shaft 11a is 400 rpm

$$TA\ (Nm) = (60,000/2\pi)2.2/400$$

With performing a unit conversion from Nm into kg, the following formula is satisfied.

$$TA\ (kg) = (974 \times 2.2)/400$$
$$= 5.36\ kg \cdot m$$

Therefore, the torque TA from the start-up motor 16 of the flywheel rotary shaft 11a becomes 5.36 kg · m.

(b) Torque (TB) from the Stepping Motor formed on the Outer Circumferential Section of the Flywheel 11

Since the diameter of the flywheel 11 is 1.5 m, the torque (knockout force) by the repulsive force from the permanent magnet 18 and the electromagnet 19 to the flywheel 11 is 8 kg, and the electromagnets 19 are disposed at two spots, respectively, the torque TB from the stepping motor is expressed as follows:

$$TB = (8 \times 1.5/2) \times 2 = 12\ kg \cdot m$$

Accordingly, the torque (TF) from the flywheel rotary shaft 11a is expressed as follows:

$$TF = TA + TB = 5.36\ kg \cdot m + 12\ kg \cdot m = 17.36$$
$$kg \cdot m$$

Next, in a calculation of the torque (TG) of the electric generator 26 by the torque (TF) of the flywheel rotary shaft 11a, because the number of the rotations of the electric generator 26 is 600 rpm, the torque (TG) is obtained as follow:

$$TG = 17.36/(600/400) = 11.57 \ kg \cdot m$$

On the other hand, performing a single calculation of the torque (TH) of the rotary shaft of the electric generator 26 by use of Formula 2, because the output from the electric generator 26 is 67 kw and the number of rotations thereof is 600 rpm, the torque (TH) is obtained as follows:

$$TH = (6.7 \times 974)/600 = 10.87 \ kg \cdot m$$

Here, comparing the torque (TG) of the rotary shaft of the electric generator 26 obtained from the torque (TF) of the flywheel rotary shaft 11a to the torque (TH) singly calculated by use of Formula 2, the relationship between the torques (TG) and (TH) is expressed as follows:

$$TG = 11.57 \ kg \cdot m > TH = 10.87 \ kg \cdot m$$

That is to say, the flywheel 11 applies, to the electric generator 26, torque not smaller than the rated power of the electric generator 26. Consequently, it has become obvious that the flywheel electric generator 1 can increase the generated electric power which is output from the electric generator 26.

The present invention is not limited to the specific details and representative embodiments shown and described herein, this invention may be modified in various forms without departing from the sprit or scope of the general inventive concept thereof.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A flywheel electric generator, comprising:

   a start-up motor;
   a flywheel rotary shaft which is rotated by the start-up motor;
   a flywheel which rotates by coupling with the flywheel rotary shaft;
   a plurality of permanent magnets which are disposed at a substantially equal distance on outer circumferential sections of the flywheel;
   a pair of electromagnets arranged at fixed positions on both sides of the flywheel along its diameter direction so as to face the permanent magnets; and
   an electric generator which is rotationally driven by the flywheel rotary shaft.

2. The flywheel electric generator according to claim 1, wherein
   the flywheel is composed of two pieces of circular plates which are arranged separately in parallel to each other and a plurality of support plates which are disposed so as to couple the two pieces of the circular plates with one another on circumferential sections thereof, and
   the plurality of permanent magnets are supported on the plurality of the support plates, respectively.

3. The flywheel electric generator according to claim 1 or 2, wherein the flywheel rotary shaft is coupled with the start-up motor and the electric generator, respectively, through a first and a second clutches.

4. The flywheel electric generator according to any of claims 1 to 3, wherein the facing surfaces of the permanent magnets and the electromagnets are arranged with a prescribed inclination angle.

**5.** The flywheel electric generator according to claim 4, wherein the inclination angle is not more than 30°each.

**6.** The flywheel electric generator according to claim 5, wherein the inclination angle is approximately 22.5°each.

**7.** The flywheel electric generator according to claim 3 and any of claims 4 to 6, wherein the first and second clutches are electromagnetic clutches.

**8.** The flywheel electric generator according to any of claims 1 to 7, wherein the permanent magnets of an even number are arranged on the outer circumferential sections of the flywheel.

**9.** The flywheel electric generator according to any of claims 1 to 8, wherein a minimum gap between the facing positions of the electromagnets and the permanent magnets is approximately 1 mm.

Fig.1

Fig.2

Fig.3

Fig.4

Fig.5

Fig.6

Fig.7 (PRIOR ART)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005346002 A
- JP 2001258294 A
- JP 6303738 A